# EUROPÄISCHE PATENTSCHRIFT

(11) **EP 3 517 212 B1**
(45) Veröffentlichungstag und Bekanntmachung des Hinweises auf die Patenterteilung: **13.05.2020**
(21) Anmeldenummer: 19153182.1
(22) Anmeldetag: 23.01.2019
(51) Int. Cl.: B05B 1/18, B05B 1/30, E03C 1/04, B05B 1/36, B05B 1/32, B05B 12/08, B05B 15/528

(54) **BRAUSESTRAHLERZEUGUNGSVORRICHTUNG MIT ÜBERDRUCKVENTIL**
SPRAY JET GENERATING DEVICE WITH PRESSURE RELIEF VALVE
DISPOSITIF DE GÉNÉRATION DE JETS DE DOUCHE À VANNE DE SURPRESSION

(30) Priorität: 25.01.2018 DE 102018201183
(43) Veröffentlichungstag der Anmeldung: 31.07.2019
(73) Patentinhaber: Hansgrohe SE, 77761 Schiltach (DE)
(72) Erfinder: Butzke, Klaus, 77761 Schiltach (DE); Kalmbach, Marc, 78733 Aichhalden (DE); Kinle, Ulrich, 77773 Schenkenzell (DE)
(74) Vertreter: Patentanwälte Ruff, Wilhelm, Beier, Dauster & Partner mbB

(56) Entgegenhaltungen:
- CN-A- 104 971 834
- DE-A1-102005 012 706
- DE-B3-102012 213 518
- KR-A- 20160 061 459

## Beschreibung

Die Erfindung bezieht sich auf eine Brausestrahlerzeugungsvorrichtung für einen Brausekopf, insbesondere für einen sanitären Brausekopf, mit einer Brausestrahlscheibe, die eine Fluidkammer austrittsseitig begrenzt und mindestens eine aus der Fluidkammer ausmündende Strahlaustrittsöffnung und mindestens eine Überdruckventilöffnung aufweist, und mit mindestens einem an der Überdruckventilöffnung angeordneten Überdruckventil, das eine aus der Fluidkammer ausmündende Überdruckaustrittsöffnung, einen unbewegten Ventilsitz und einen mit diesem zusammenwirkenden, von einem Fluiddruck in der Fluidkammer gesteuert bewegten Ventilkörper aufweist, der in einer Normaldruckstellung die Überdruckaustrittsöffnung schließend gegen den Ventilsitz anliegt und in einer Überdruckstellung die Überdruckaustrittsöffnung freigebend vom Ventilsitz abgehoben ist.

Derartige Brausestrahlerzeugungsvorrichtungen werden beispielsweise in sanitären Brauseköpfen eingesetzt, wie Handbrausen, Kopfbrausen und Seitenbrausen von Duscheinrichtungen. Mit Normaldruck ist vorliegend ein Druckbereich gemeint, in welchem sich der Fluiddruck in der Fluidkammer, oftmals auch als Innendruck einer zugehörigen Brause bzw. eines zugehörigen Brausekopfes bezeichnet, bei normalem, fehlerfreiem Betrieb im bestimmungsgemäßen Gebrauch der Brausestrahlerzeugungsvorrichtung befindet. Dieser Normaldruck sollte einen zuvor geeignet festgelegten Grenzdruck nicht übersteigen, z.B. kann der Grenzdruck auf einen Wert von ca. 0,9 bar oder höher festgelegt sein, wie auf ca. 1 bar oder ca. 3 bar oder ca. 5 bar, je nach Einsatzgebiet und Einsatzzweck der Brausestrahlerzeugungsvorrichtung.

Eine bekannte Problematik dieser Vorrichtungen besteht darin, dass sich im Betrieb mit kalkhaltigem oder verschmutztem Wasser die eine bzw. meist mehreren Strahlaustrittsöffnungen durch Kalkablagerungen oder Schmutzpartikel partiell oder vollständig zusetzen können und dadurch der Druck in der Fluidkammer unerwünscht zunehmen kann. Dieser Problematik unterliegen besonders auch Brausestrahlerzeugungsvorrichtungen, deren Strahlaustrittsöffnungen einen relativ kleinen Durchmesser besitzen, z.B. zur Erzeugung eines sogenannten Feinnadelstrahls. Ein solcher Druckanstieg kann zu einem Überdruck in der Fluidkammer führen, der Schädigungen an Bauteilen verursachen kann, die diesem Überdruck ausgesetzt sind. Außerdem kann sich dadurch die Brausestrahlcharakteristik in unerwünschter Weise ändern. Mit Überdruck ist entsprechend vorliegend ein Druck in der Fluidkammer gemeint, der höher als der Normaldruck ist, insbesondere ein Fluiddruck, der über dem besagten Grenzdruck liegt. Die Festlegung des Grenzdrucks ist zweckmäßig so gewählt, dass ein Anstieg des Innendrucks der Brausestrahlerzeugungsvorrichtung, der bei verkalkten bzw. verstopften/zugesetzten Strahlaustrittsöffnungen kritisch hohe Werte schon bei nur ca. 1 bar Fließdruck des Fluids stromaufwärts des betreffenden Brausekopfs erreichen kann, noch keine unerwünschten Effekte zur Folge hat, solange der Innendruck den Grenzdruck nicht überschreitet.

Solange der Überdruckfall nicht vorliegt, legt sich der bewegliche Ventilkörper gegen den Ventilsitz an, wodurch die Überdruckaustrittsöffnung geschlossen ist. Das Fluid kann im aktiven Betrieb der Brausestrahlerzeugungsvorrichtung über die Fluidkammer in die eine oder mehreren Strahlaustrittsöffnungen gelangen und aus dieser bzw. diesen zwecks Bildung des entsprechenden Brausestrahls austreten. Wenn der Überdruckfall eintritt, hebt sich der Ventilkörper vom Ventilsitz ab, wodurch die Überdruckaustrittsöffnung freigegeben wird. Über die freigegebene Überdruckaustrittsöffnung kann dann Fluid aus der Fluidkammer austreten, so dass der Überdruck in der Fluidkammer abgebaut werden kann.

In der Offenlegungsschrift CN 104971834 A und der Gebrauchsmusterschrift CN 202527296 U sind Brausestrahlerzeugungsvorrichtungen der eingangs genannten Art offenbart, bei denen das Überdruckventil ein in der Überdruckventilöffnung der Brausestrahlscheibe angeordnetes, hohlzylindrisches Ventilgehäuse aufweist, an dessen einem Stirnbereich der Ventilsitz und die Überdruckaustrittsöffnung als sich durch den Ventilsitz hindurch erstreckende Öffnung vorgesehen sind. Der Ventilkörper ist als axialbeweglicher Ventilstift ausgebildet, der mit einem Kopfbereich die Überdruckaustrittsöffnung schließt, wenn er gegen den Ventilsitz anliegt, und der am Ventilgehäuse unter Vorspannung einer Schraubenfeder in der Schließstellung vorgespannt gehalten ist.

Die Patentschrift AT 252826 B offenbart einen Brausekopf mit Überdrucksicherung, bei dem zwischen der Brausestrahlscheibe und einem umgebenden Brausekopfgehäuse ein Ringspalt belassen ist, in dem sich ein Dichtungsring befindet, der in eine umfangsseitige Ringnut der Brausestrahlscheibe eingefügt ist. Am Boden der Ringnut sind Überdruckaustrittsöffnungen vorgesehen, die bei Normaldruck vom Dichtungsring verschlossen sind und im Überdruckfall vom Dichtungsring freigegeben werden, indem sich dieser durch den Überdruck elastisch aufweitet.

In der nachveröffentlichten Offenlegungsschrift DE 10 2016 219 551 A1 ist eine Brausestrahlerzeugungsvorrichtung mit Nachtropfschutz beschrieben, bei der an einer oder mehreren Strahlaustrittsöffnungen einer Strahlscheibe jeweils ein bewegliches Fluidaustrittselement angeordnet ist, das einen beweglichen Ventilkörper mit einer aus einer Fluidkammer stromaufwärts der Brausestrahlscheibe ausmündenden Fluidaustrittsöffnung aufweist. Der bewegliche Ventilkörper wirkt mit einem unbeweglichen Ventilsitz zusammen, der die Fluidaustrittsöffnung abhängig von einem Fluiddruck in der Fluidkammer in einer Freigabeposition des Fluidaustrittselements freigibt und in einer Absperrposition des Fluidaustrittselements absperrt. Das Fluidaustrittselement gelangt durch den normalen Fluidbetriebsdruck in der Fluidkammer in die Freigabeposition. Wenn in der Fluidkammer kein Fluiddruck ansteht oder dieser jedenfalls noch nicht größer als ein zuvor festgelegter, gegenüber dem Normaldruck geringerer Grenzdruck bzw. Mindestdruck von z.B. 0,2 bar bis 0,35 bar ist, befindet sich das Fluidaustrittselement in seiner Absperrposition und verhindert ein Nachtropfen.

In der nicht vorveröffentlichten Offenlegungsschrift DE 10 2016 213 491 A1 ist eine Brausestrahlerzeugungsvorrichtung der eingangs genannten Art beschrieben, bei der die Überdruckaustrittsöffnung von der Überdruckventilöffnung der Strahlscheibe oder von einem sich durch diese hindurch erstreckenden Strahlaustrittsnippel gebildet ist und als beweglicher Ventilkörper ein Deformationsventilelement fungiert, das von dem in der Fluidkammer herrschenden Druck gesteuert zwischen einer Normaldruckstellung und einer Überdruckstellung deformationsbeweglich ist. Das Deformationsventilelement kann z.B. eine Dichtklappe, eine deformierbare Dichtmembran oder ein deformierbares Scheibenelement sein, das die Fluidkammer auf einer der Brausestrahlscheibe abgewandten Seite begrenzt.

In der nachveröffentlichten Offenlegungsschrift DE 10 2016 225 987 A1 ist eine Brausestrahlerzeugungsvorrichtung beschrieben, die sich vorteilhaft für die Erzeugung eines Feinnadelstrahls als Brausestrahl eignet, wozu ein in einer jeweiligen Strahlscheibenöffnung angeordnetes Strahlaustrittselement topfförmig mit einem austrittsseitigen Boden, einer Seitenwandung und einer vom Boden und der Seitenwandung begrenzten Hohlkammer ausgebildet ist, wobei der Boden in Strahlaustrittsrichtung weisend angeordnet ist und eine Mehrzahl von Feinstrahlöffnungen aufweist. Die Feinstrahlöffnungen können einen sehr geringen Austrittsquerschnitt von z.B. höchstens 0,2mm² oder 0,1mm² besitzen. Der Boden und die Seitenwandung sind vorzugsweise aus einem elastischen Material derart gebildet, dass sich das Strahlaustrittselement im normalen Brausebetrieb durch den anstehenden Normaldruck des Brausefluids wölbend verformen kann.

In der Offenlegungsschrift DE 10 2005 012 706 A1 ist ein Duschkopf mit einem becherförmigen Gehäuseteil und einer dessen offenes Ende verschließenden Lochplatte offenbart, die für jeden ihrer Durchgänge ein Ventilelement aufweist, das elastisch in eine Schließstellung vorgespannt ist und durch den im normalen Brausebetrieb anstehenden Normaldruck des Wassers in eine Offenstellung bewegbar ist, wobei die Ventilelemente dort durch gewölbte Membranabschnitte gebildet sind, die jeweils mindestens einen Schnitt aufweisen. Mit diesen Ventilelementen soll einem unerwünschten Nachtropfen von Wasser aus dem Duschkopf nach Abstellen der Wasserzufuhr begegnet werden.

Der Erfindung liegt als technisches Problem die Bereitstellung einer Brausestrahlerzeugungsvorrichtung der eingangs genannten Art zugrunde, die sich mit relativ geringem Aufwand herstellen lässt und insbesondere hinsichtlich ihrer Überdruckventilrealisierung vorteilhaft ist.

Die Erfindung löst dieses Problem durch die Bereitstellung einer Brausestrahlerzeugungsvorrichtung mit den Merkmalen des Anspruchs 1.

Bei dieser Brausestrahlerzeugungsvorrichtung ist der Ventilkörper als Ventilmembrankörper aus einem elastischen Material gebildet. Der Ventilmembrankörper weist einen sich in die Überdruckventilöffnung erstreckenden, zylindrischen Mittenteil und einen Randteil auf, der den Mittenteil umgibt und deformierend klappbeweglich ist. Der Ventilmembrankörper bewegt sich mit seinem Mittenteil durch die deformierende Klappbewegung seines Randteils mit zur Brausestrahlscheibe senkrechter Hauptrichtungskomponente zwischen der Normaldruckstellung und der Überdruckstellung in der Überdruckventilöffnung. Unter Hauptrichtungskomponente ist hierbei wie üblich zu verstehen, dass die Bewegungsrichtung des Mittenteils eine größere Richtungskomponente senkrecht zu einer Scheibenebene der Brausestrahlscheibe besitzt als parallel zu der Scheibenebene.

Dies stellt eine fertigungstechnisch und funktionell vorteilhafte Realisierung des Überdruckventils und insbesondere seines Ventilkörpers dar. Mit seinem klappbeweglichen Randteil kann der Ventilmembrankörper so ausgelegt werden, dass er erst dann von seiner Normaldruckstellung in seine Überdruckstellung bewegt wird, wenn der Fluiddruck in der Fluidkammer auf einen vorgebbaren Überdruckwert angestiegen ist, der über einem Normaldruck bzw. Normaldruckbereich liegt, in welchem sich der Fluiddruck in der Fluidkammer bei normalem, störungsfreiem Betrieb der Brausestrahlerzeugungsvorrichtung befindet. Solange der Fluiddruck in der Fluidkammer unter dem betreffenden Überdruckwert bleibt, verbleibt der Ventilmembrankörper in seiner Normaldruckstellung. Die Überdruckventilöffnung in der Strahlscheibe kann für die Beweglichkeit des zylindrischen Mittenteils des Ventilmembrankörpers genutzt werden, und das Mittenteil kann bei Bedarf vom Benutzer von außen über die Außenseite der Strahlscheibe sichtbar sein. Bei entsprechender Ausführung kann der Benutzer anhand der Lage des Mittenteils in der Überdruckventilöffnung erkennen, ob sich der Ventilmembrankörper in seiner Normaldruckstellung oder seiner Überdruckstellung befindet. Außerdem kann bei Bedarf der Ventilmembrankörper mit seinem in der Überdruckventilöffnung befindlichen Mittenteil in seiner Form und/oder seinem Aussehen der oder den Strahlaustrittsöffnungen der Strahlscheibe bzw. einem in der jeweiligen Strahlaustrittsöffnung vorgesehenen Strahlaustrittselement entsprechen. Das kann im Hinblick auf ein optisch einheitliches Aussehen der Brausestrahlerzeugungsvorrichtung an der Strahlscheibenaußenseite oder im Hinblick auf andere Designaspekte erwünscht sein. Zudem kann dies funktionell dahingehend günstig sein, dass in entsprechenden Ausführungen das Fluid im Überdruckfall in ähnlicher Weise aus dem Überdruckventil austritt wie im Normalbetrieb aus der oder den Strahlaustrittsöffnungen der Strahlscheibe.

In einer Weiterbildung der Erfindung ist die Fluidkammer auf ihrer der Brausestrahlscheibe abgewandten Seite durch eine den Ventilsitz aufweisende Kammerbodenplatte begrenzt. Somit kann die Kammerbodenplatte vorteilhaft sowohl zur rückwärtigen Begrenzung der Fluidkammer als auch zur Bereitstellung des Ventilsitzes für das Überdruckventil dienen.

In einer Weiterbildung der Erfindung ist das Mittenteil des Ventilmembrankörpers hohlzylindrisch und weist die Überdruckaustrittsöffnung auf, wobei die Überdruckaustrittsöffnung aus dem Ventilmembrankörper auf dessen dem Ventilsitz abgewandten Seite ausmündet. Vorteilhaft dient in diesem Fall das Mittenteil zur Bereitstellung der Überdruckaustrittsöffnung, und die Überdruckaustrittsöffnung kann wie die mindestens eine Strahlaustrittsöffnung an der Außenseite der Brausestrahlscheibe ausmünden. Im Überdruckfall aus der Fluidkammer über das Überdruckventil abgeführtes Fluid kann somit auf der gleichen Seite und bei Bedarf mit ähnlicher Fluidaustrittscharakteristik aus der Brausestrahlscheibe austreten wie das Fluid im Normalbetrieb aus der oder den Strahlaustrittsöffnungen.

In einer Weiterbildung der Erfindung ist das Mittenteil des Ventilmembrankörpers hohlzylindrisch und weist die Überdruckaustrittsöffnung auf, und die Überdruckaustrittsöffnung mündet in den Ventilmembrankörper auf dessen dem Ventilsitz zugewandten Seite ein. Dadurch kann in der Normaldruckstellung, in welcher sich der Ventilmembrankörper befindet, solange kein Überdruckfall vorliegt, d.h. bei fehlendem Fluiddruck oder bei normalem Fluidbetriebsdruck in der Fluidkammer, die Überdruckaustrittsöffnung sehr einfach dadurch geschlossen gehalten werden, dass der Ventilmembrankörper mit der Einmündung der Überdruckaustrittsöffnung in seinem Mittenteil gegen den Ventilsitz anliegt.

In einer Ausgestaltung der Erfindung weist der Ventilsitz eine Absperrkontur auf, die in der Normaldruckstellung des Ventilmembrankörpers in einen Einmündungsbereich der Überdruckaustrittsöffnung im Ventilmembrankörper eingreift. Dies ist für ein zuverlässiges fluiddichtes Schließen der Überdruckaustrittsöffnung günstig und mit relativ geringem Aufwand realisierbar.

In einer weiteren Ausgestaltung der Erfindung ist die Absperrkontur durch einen kegelförmigen oder kugelförmigen Absperrvorsprung gebildet, was hinsichtlich Abdichtungsverhalten und Herstellungsaufwand günstig ist.

Zusätzlich oder alternativ zu der Absperrkontur weist in einer Ausgestaltung der Erfindung ein Einmündungsbereich der Überdruckaustrittsöffnung im Ventilmembrankörper eine in der Normaldruckstellung des Ventilmembrankörpers kegelstumpfförmige Außenkontur auf, und der Ventilsitz besitzt eine korrespondierend kegelstumpfförmige Innenkontur. Auch dies stellt wiederum eine vorteilhafte, einfache Realisierungsmöglichkeit für ein fluiddichtes Schließen der Überdruckaustrittsöffnung in der Normaldruckstellung des Ventilmembrankörpers dar.

In einer Weiterbildung der Erfindung weist der Ventilsitz die Überdruckaustrittsöffnung auf, und die Überdruckaustrittsöffnung mündet in den Ventilsitz auf dessen dem Ventilmembrankörper zugewandten Seite ein. In diesem Fall fungiert der Ventilmembrankörper als beweglicher Schließkörper, der die Überdruckaustrittsöffnung im Ventilsitz in der Normaldruckstellung verschließt und in der Überdruckstellung freigibt. Das Schließen und Freigeben der Überdruckaustrittsöffnung im Ventilsitz kann vorteilhaft durch das zylindrische Mittenteil des Ventilmembrankörpers erfolgen.

In einer Weiterbildung der Erfindung weist die mindestens eine Strahlaustrittsöffnung einen Strahlaustrittsnippel auf, der mit dem Ventilmembrankörper einteilig aus dem elastischen Material gebildet ist. Dies ermöglicht in fertigungstechnisch vorteilhafter Weise eine gemeinsame Fertigung des Strahlaustrittsnippels, der als Fluidaustrittselement für den normalen Brausestrahl fungiert, und des Ventilmembrankörpers des Überdruckventils. In einer entsprechenden Ausführung können der Strahlaustrittsnippel und der Ventilmembrankörper gemeinsame Bestandteile einer aus dem elastischen Material gefertigten Strahlmatte sein, die sich über im Wesentlichen die gesamte Fläche der Brausestrahlscheibe an deren Innenseite befindet und an der sowohl die einen oder mehreren Strahlaustrittsnippel als auch der oder die Ventilmembrankörper ausgebildet sind. In einer alternativen Ausführung sind der Strahlaustrittsnippel und der Ventilmembrankörper als jeweils eigenständige Bauteile aus dem elastischen Material gebildet.

In einer Weiterbildung der Erfindung ist die mindestens eine Strahlaustrittsöffnung von einem Strahlaustrittsnippel aus einem elastischen Material gebildet, der einen sich in eine Nippelaustrittsöffnung der Strahlscheibe erstreckenden, hohlzylindrischen Mittenteil und einen den Mittenteil umgebenden, deformierend klappbeweglichen Randteil aufweist, wobei sich der Strahlaustrittsnippel mit seinem Mittenteil durch die deformierende Klappbewegung seines Randteils mit zur Brausestrahlscheibe senkrechter Hauptrichtungskomponente zwischen einer Nulldruckstellung und einer Normaldruckstellung in der Nippelaustrittsöffnung bewegt. Mit Nulldruckstellung ist hierbei eine Stellung gemeint, die der Strahlaustrittsnippel einnimmt, wenn kein Fluiddruck in der Fluidkammer ansteht, mit Normaldruckstellung diejenige Stellung, die er einnimmt, wenn der normale Fluiddruck im Betrieb der Brausestrahlerzeugungsvorrichtung anliegt. Der Strahlaustrittsnippel entspricht daher in seinem Aufbau und in seiner Bewegungscharakteristik weitgehend dem Ventilmembrankörper und kann dementsprechend mit relativ geringem Aufwand ähnlich hergestellt sein. Es besteht der Unterschied, dass der Strahlaustrittsnippel seine Lage bereits dann verändert, wenn der Fluiddruck in der Fluidkammer auf das Normaldruckniveau im Betrieb ansteigt, während der Ventilmembrankörper seine Lage erst verändert, wenn der Fluiddruck in der Fluidkammer aufgrund eines Überdruckfalles auf einen Überdruckwert über dem Normaldruckniveau ansteigt. Der Strahlaustrittsnippel kann insbesondere ein bewegliches Fluidaustrittselement sein, wie es in der oben erwähnten deutschen Patentanmeldung 10 2016 219 551 beschrieben ist, deren Inhalt hiermit durch Verweis zum Bestandteil der vorliegenden Anmeldung gemacht wird und auf den für weitere Details bezüglich eines solchen Fluidaustrittselements verwiesen werden kann.

In einer Weiterbildung der Erfindung weist die Brausestrahlscheibe mindestens zwei Überdruckventilöffnungen auf, an denen je ein Überdruckventil angeordnet ist, wobei die Überdruckventile auf voneinander verschiedene Überdruckwerte des Fluiddrucks in der Fluidkammer ansprechen. Dies realisiert eine mindestens zweistufige Überdruckabhilfemaßnahme. Wenn der Fluiddruck in der Fluidkammer immer mehr ansteigt, spricht zunächst dasjenige Überdruckventil an, das auf einen niedrigeren Überdruckwert ausgelegt ist, und wenn der Fluiddruck noch weiter steigt, spricht auch das weitere Überdruckventil an, das auf einen höheren Überdruckwert ausgelegt ist.

In einer Weiterbildung der Erfindung spricht das mindestens eine Überdruckventil mehrstufig auf mindestens zwei voneinander verschiedene Überdruckwerte des Fluiddrucks in der Fluidkammer an, wobei sich der Ventilmembrankörper bei einem ersten Überdruckwert in eine die Überdruckaustrittsöffnung mit einem ersten Öffnungsquerschnitt partiell freigebende erste Überdruckstellung und bei einem gegenüber dem ersten größeren zweiten Überdruckwert in eine die Überdruckaustrittsöffnung mit gegenüber dem ersten größeren zweiten Öffnungsquerschnitt freigebende zweite Überdruckstellung bewegt. Dies realisiert eine mindestens zweistufige Überdruckabhilfemaßnahme an ein und demselben Überdruckventil.

Vorteilhafte Ausführungsformen der Erfindung sind in den Zeichnungen dargestellt. Diese und weitere vorteilhafte Ausführungsformen der Erfindung werden nachfolgend näher beschrieben. Hierbei zeigen:
- Fig. 1: Eine ausschnittweise Draufsicht auf eine Brausestrahlerzeugungsvorrichtung für einen Brausekopf,
- Fig. 2: eine Schnittansicht der Brausestrahlerzeugungsvorrichtung längs einer Linie II-II von Fig. 1 in einem Normaldruckzustand,
- Fig. 3: die Ansicht von Fig. 2 in einem Überdruckzustand,
- Fig. 4: eine Ansicht entsprechend Fig. 2 für eine Variante mit kugelförmigem Absperrvorsprung an einem Ventilsitz in einem Nulldruckzustand,
- Fig. 5: die Ansicht von Fig. 3 für die Variante von Fig. 4,
- Fig. 6: die Ansicht von Fig. 4 für eine Variante mit kegelförmigen Absperrvorsprung am Ventilsitz,
- Fig. 7: die Ansicht von Fig. 3 für die Variante von Fig. 6,
- Fig. 8: die Ansicht von Fig. 4 für eine Variante mit kegelstumpfförmiger Innenkontur am Ventilsitz und Federvorspannelement und

- Fig. 9: die Ansicht von Fig. 4 für eine Variante mit im Ventilsitz angeordneter Überdruckaustrittsöffnung .

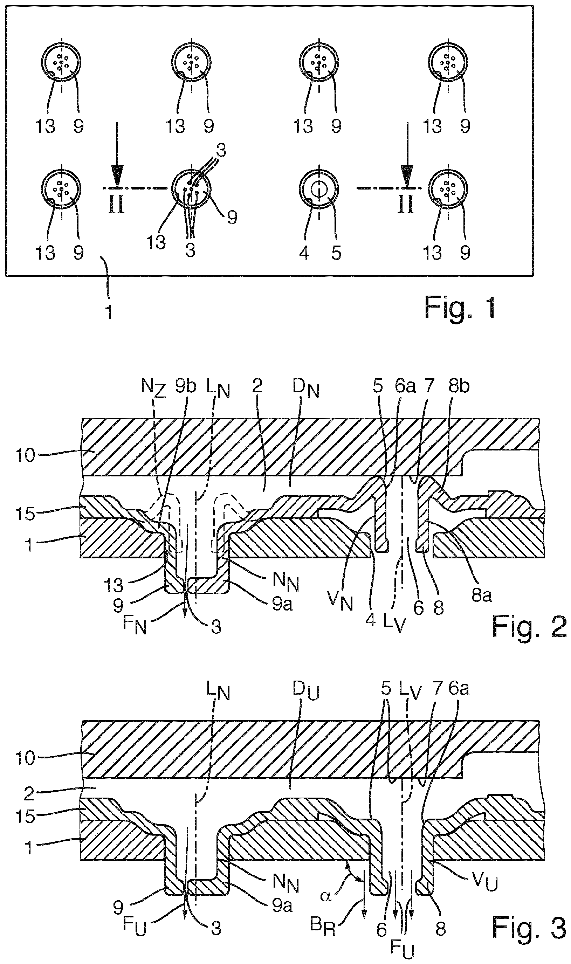

Die in den Figuren 1 bis 3 veranschaulichte Brausestrahlerzeugungsvorrichtung beinhaltet eine Brausestrahlscheibe 1, die eine Fluidkammer 2 austrittsseitig begrenzt und mindestens eine aus der Fluidkammer 2 ausmündende Strahlaustrittsöffnung 3 und mindestens eine Überdruckventilöffnung 4 aufweist. Weiter umfasst die Brausestrahlerzeugungsvorrichtung mindestens ein an der Überdruckventilöffnung 4 angeordnetes Überdruckventil 5.

Das Überdruckventil 5 weist eine aus der Fluidkammer 2 ausmündende Überdruckaustrittsöffnung 6, einen unbewegten Ventilsitz 7 und einen Ventilkörper auf, der als Ventilmembrankörper 8 aus einem elastischen Material gebildet ist. Der Ventilmembrankörper 8 wirkt mit dem Ventilsitz 7 zusammen und ist gesteuert von einem Fluiddruck in der Fluidkammer 2 bewegbar. Speziell ist der Ventilmembrankörper 8 zwischen einer in Fig. 2 gezeigten Normaldruckstellung V_{N} und einer in Fig. 3 gezeigten Überdruckstellung V_{U} bewegbar. In der Normaldruckstellung V_{N} liegt der Ventilmembrankörper 8 so gegen den Ventilsitz 7 an, dass die Überdruckaustrittsöffnung 6 geschlossen ist. In der Überdruckstellung V_{U} ist der Ventilkörper 8 vom Ventilsitz 7 abgehoben, und die Überdruckaustrittsöffnung 6 ist freigegeben.

Der Ventilmembrankörper 8 weist einen sich in die Überdruckventilöffnung 4 erstreckenden, zylindrischen Mittenteil 8a und einen den Mittenteil 9a umgebenden, deformierend klappbeweglichen Randteil 8b auf. Durch die deformierende Klappbewegung seines Randteils 8b bewegt sich der Ventilmembrankörper 8 mit seinem Mittenteil 8a mit zur Brausestrahlscheibe 1 senkrechter Hauptrichtungskomponente zwischen der Normaldruckstellung V_{N} und der Überdruckstellung V_{U} in der Überdruckventilöffnung 4 der Strahlscheibe 1. Mit anderen Worten bewegt sich das Mittenteil 8a in der Überdruckventilöffnung 4 im Wesentlichen translatorisch mit einer Bewegungsrichtung B_{R}, die mit einer Scheibenebene bzw. Außenseitenfläche der Strahlscheibe 1 einen Winkel α zwischen 45° und 90° einschließt, der im gezeigten Beispiel 90° beträgt. Im gezeigten Beispiel ist die Überdruckstellung V_{U} des Ventilmembrankörpers 8 dadurch definiert, dass er mit seinem Randteil 8b gegen einen zugeordneten Innenbereich der Strahlscheibe 1 zur Anlage kommt.

In entsprechenden Ausführungen ist wie im gezeigten Beispiel das Mittenteil 8a des Ventilmembrankörpers 8 hohlzylindrisch und weist die Überdruckaustrittsöffnung 6 auf. Die Überdruckaustrittsöffnung 6 mündet aus dem Ventilmembrankörper 8 auf dessen dem Ventilsitz 7 abgewandten Seite aus. Die Bewegungsrichtung B_{R} des Mittenteils 8a ist vorzugsweise parallel zu einer Längsmittenachse L_{V} des Mittenteils 8a. In entsprechenden Ausführungen ist der Mittenteil 8a und/oder der Randteil 8b des Ventilmembrankörpers 8 rotationssymmetrisch zu dieser Längsmittenachse L_{V}. In alternativen Ausführungen ist das Mittenteil des Ventilmembrankörpers vollzylindrisch, d.h. nicht hohl, und die Überdruckaustrittsöffnung 6 ist anderweitig realisiert.

In entsprechenden Ausführungen ist, wie beim gezeigten Ausführungsbeispiel, das Mittenteil 8a des Ventilmembrankörpers 8 hohlzylindrisch und weist die Überdruckaustrittsöffnung 6 auf, und die Überdruckaustrittsöffnung 6 mündet mit einem Einmündungsbereich 6a in den Ventilmembrankörper 8 auf dessen dem Ventilsitz 7 zugewandten Seite ein. In diesem Fall kann die Überdruckaustrittsöffnung 6 einfach dadurch verschlossen werden, dass sich der Ventilsitz 7 gegen diesen Einmündungsbereich 6a des Ventilmembrankörpers 8 anlegt.

In entsprechenden Ausführungen ist die Fluidkammer 2 auf ihrer der Brausestrahlscheibe 1 abgewandten Seite durch eine den Ventilsitz 7 aufweisende Kammerbodenplatte 10 begrenzt. Der Ventilsitz 7 ist von einem dem Ventilmembrankörper 8 zugewandten Flächenbereich der Kammerbodenplatte 10 gebildet. In alternativen Ausführungen ist die Fluidkammer 2 durch eine andere herkömmliche Struktur innenseitig begrenzt, d.h. auf ihrer der Brausestrahlscheibe 1 abgewandten Seite. Der Ventilsitz 7 ist in diesem Fall von einer anderen herkömmlichen Ventilsitzstruktur gebildet.

Die Strahlaustrittsöffnung 3 der Brausestrahlscheibe 1 dient zur Bereitstellung des für den normalen Betrieb der Brausestrahlerzeugungsvorrichtung gewünschten Brausestrahls. Im gezeigten Beispiel ist die Strahlaustrittsöffnung 3 der Strahlscheibe 1 von einem Strahlaustrittsnippel 9 aus einem elastischen Material gebildet, der wie der Ventilmembrankörper 8 einen zylindrischen Mittenteil 9a und einen diesen umgebenden, deformierend klappbeweglichen aufweist. Durch die deformierende Klappbewegung seines Randteils 9b ist der Strahlaustrittsnippel 9 mit seinem Mittenteil 9a mit zur Brausestrahlscheibe 1 senkrechter Hauptrichtungskomponente zwischen einer in Fig. 2 gestrichelt angedeuteten Nulldruckstellung N_{Z} und einer in Fig. 2 mit durchgezogenen Linien dargestellten Nippel-Normaldruckstellung N_{N} in einer Nippelaustrittsöffnung 13 der Strahlscheibe 1 beweglich. In seiner Normaldruckstellung N_{N} stützt sich der Strahlaustrittsnippel 9 mit seinem Randteil 9b gegen einen zugeordneten Innenbereich der Strahlscheibe 1 ab. Der Strahlaustrittsnippel 9 kann insbesondere als Fluidaustrittselement gebildet sein, wie es in der oben erwähnten älteren deutschen Patentanmeldung 10 2016 219 551 beschrieben ist. In alternativen Ausführungen ist die Strahlaustrittsöffnung direkt von der Strahlscheibe gebildet, z.B. als durch diese hindurchführende Bohrung, oder sie ist von einem unbewegten oder sich auf andere Weise bewegenden, andersartig geformten Strahlaustrittsnippel gebildet.

Der Mittenteil 9a des Strahlaustrittsnippels 9 ist im gezeigten Beispiel hohlzylindrisch und schließt austrittsseitig, d.h. nach vorne bzw. in Fig. 2 nach unten, topfförmig mit einem Boden ab, in den die Strahlaustrittsöffnung 3 eingebracht ist, wobei vorzugsweise mehrere Strahlaustrittsöffnungen 3 im Boden vorgesehen sind, wie aus Fig. 1 ersichtlich, in der eine zentrische und diese umgebend fünf weitere Strahlaustrittsöffnungen 3 gezeigt sind. In entsprechenden Ausführungen ist die Seitenwand des Mittenteils 9a und/oder der Randteil 9b des Strahlaustrittsnippels 9 rotationssymmetrisch zu einer Längsmittenachse L_{N}, die ihrerseits parallel zur Ausfahr- und Einfahrbewegung des Strahlaustrittsnippels 9 ist. Der Strahlaustrittsnippel 9 kann insbesondere als Strahlaustrittselement gebildet sein, wie es in der oben erwähnten älteren deutschen Patentanmeldung 10 2016 225 987 für die dortige Brausestrahlaustrittsvorrichtung beschrieben ist, deren Inhalt hiermit durch Verweis zum Bestandteil der vorliegenden Anmeldung gemacht wird und auf den für weitere Details bezüglich eines solchen Strahlaustrittselements verwiesen werden kann. Insbesondere kann es sich bei den Strahlaustrittsöffnungen 3 im Boden des Mittenteils 9a des Strahlaustrittsnippels 9 um Feinstrahlöffnungen handeln.

Vorzugsweise ist, wie üblich, eine Mehrzahl von Strahlaustrittsnippeln 9 bzw. Strahlaustrittsöffnungen 3 in einer regelmäßigen Verteilung über die gesamte Fläche der Strahlscheibe 1 hinweg oder über Teilbereiche hinweg, z.B. auf verschiedenen Radien, vorgesehen, wie in Fig. 1 ausschnittweise zu erkennen. Je nach Bedarf ist zudem in entsprechenden Ausführungen eine Mehrzahl von Überdruckventilen 5 vorgesehen, z.B. über die Strahlscheibenfläche hinweg verteilt anstelle einer jeweiligen Strahlaustrittsöffnung bzw. eines Strahlaustrittsnippels oder an Zwischenpositionen der regelmäßigen Verteilung der Strahlaustrittsöffnungen bzw. Strahlaustrittsnippel.

Bei abgestellter Fluidversorgung und druckloser Fluidkammer 2 befindet sich die Brausestrahlerzeugungsvorrichtung in einem Nulldruckzustand, in welchem der Strahlaustrittsnippel 9 seine eingefahrene bzw. eingeklappte Nulldruckstellung N_{Z} einnimmt. Das Überdruckventil 5 befindet sich in seiner Normaldruckstellung V_{N}. Wenn die Fluidversorgung geöffnet bzw. aktiviert ist und sich die Brausestrahlerzeugungsvorrichtung in einem Normaldruckzustand befindet, d.h. in einem bestimmungsgemäßen, störungsfreien Betrieb ohne Auftreten eines Überdrucks, wird die Fluidkammer 2 mit Fluid F_{N} auf normalem Betriebsdruck D_{N} versorgt. Dadurch fährt der Strahlaustrittsnippel 9 mit seinem Mittenteil 9a aus der Nulldruckstellung N_{Z} in seine Nippel-Normaldruckstellung N_{N} durch die Nippelaustrittsöffnung 13 der Strahlscheibe 1 hindurch nach vorn aus und kann sich dabei optional mit seinem Boden und/oder seiner Seitenwand wölbend verformen, was Kalk- und Schmutzablagerungen am Strahlaustrittsnippel 9 vorbeugen bzw. ein Ablösen derselben erleichtern kann. Das Überdruckventil 5 verbleibt in seiner Normaldruckstellung V_{N} und hält seine Überdruckaustrittsöffnung 6 geschlossen. Das Fluid F_{N} tritt somit ausschließlich aus der bzw. den Strahlaustrittsöffnungen 3 nach vorn aus und bildet den gewünschten Brausestrahl.

Wenn die Fluidkammer 2 wieder drucklos wird, z.B. durch Abstellen der vorgelagerten Fluidversorgung, bewegt sich der Strahlaustrittsnippel 9 selbsttätig in seine Nulldruckstellung N_{Z} zurück. Dazu ist er insbesondere mit seinem Randteil 9b entsprechend elastisch rückstellend ausgeführt.

Wenn durch Partikel- und/oder Kalkablagerungen an dem oder den Strahlaustrittsnippel 9 bzw. der oder den Strahlaustrittsöffnungen 3 oder eine anderweitige Störung der Fluiddruck in der Fluidkammer 2 über das Niveau des Normaldrucks D_{N} hinaus bis auf einen Überdruckwert D_{U} ansteigt, auf den das Überdruckventil 5 mit seiner entsprechenden Ansprechschwelle ausgelegt ist, öffnet das Überdruckventil 5, indem der Ventilmembrankörper 8 vom Ventilsitz 7 abhebt und sich in seine Überdruckstellung V_{U} bewegt. Dies gibt die Überdruckaustrittsöffnung 6 frei, so dass in der Fluidkammer 2 unter Überdruck stehendes Fluid F_{U} nun zusätzlich über die Überdruckaustrittsöffnung 6 nach vorn aus der Fluidkammer 2 austreten kann. Durch geeignete Dimensionierung des Austrittsquerschnitts der Überdruckaustrittsöffnung 6 kann dafür gesorgt werden, dass sich der Fluiddruck in der Fluidkammer 2 entsprechend zügig reduziert. In der Ausführung mit dem bzw. den Strahlaustrittsnippeln 9 befinden sich diese auch im Überdruckfall in ihrer ausgefahrenen Normaldruckstellung N_{N}, so dass etwas von dem Überdruckfluid F_{U} auch aus diesen austreten kann, soweit sie nicht verstopft sind.

So kann das unter Überdruck stehende Fluid F_{U} über das Überdruckventil 5 z.B. wie gezeigt nach vorn aus der Brausestrahlscheibe 1 austreten, in gleicher Weise wie das im Normalbetrieb aus der Strahlaustrittsöffnung 3 austretende Fluid F_{N}. Sobald der Überdruck in der Fluidkammer 2 abgebaut ist und der Fluiddruck wieder das normale Druckniveau des Normaldrucks D_{N} erreicht, bewegt sich der Ventilmembrankörper 8 selbsttätig in seine Normaldruckstellung V_{N} zurück. Dazu ist er insbesondere mit seinem Randteil 8b entsprechend elastisch rückstellend ausgeführt. Der Ventilsitz 7 dient hierbei als Anschlagsbegrenzung, d.h. er definiert die Normaldruckstellung V_{N} des Ventilmembrankörpers 8.

In entsprechenden Ausführungsformen sind der Strahlaustrittsnippel 9 und der Ventilmembrankörper 8 wie im gezeigten Beispiel einteilig aus dem gleichen elastischen Material gebildet. Insbesondere können sie Bestandteil einer einteiligen Strahlmatte 15 aus elastischem Material sein, die gegen die Innenseite der Strahlscheibe 1 anliegt. Alternativ können sie als Zweiergruppe einteilig gebildet sein. In weiteren alternativen Ausführungen sind der Strahlaustrittsnippel 9 und der Ventilmembrankörper 8 als jeweils eigenständige Bauteile aus den gleichen oder unterschiedlichen elastischen Materialien gebildet. Das unterschiedliche Ansprechverhalten für den Strahlaustrittsnippel 9 einerseits, der schon bei Normaldruck D_{N} in der Fluidkammer 2 ausfährt, und den Ventilmembrankörper 8 andererseits, der erst bei Überdruck D_{U} in der Fluidkammer 2 ausfährt, lässt sich in einfacher Weise durch entsprechend unterschiedliche Ausführung des jeweiligen biegeelastischen Randteils 9a bzw. 8b realisieren. Dazu wird der Randteil 9b des Strahlaustrittsnippels 9 biegeweicher ausgeführt als der Randteil 8b des Ventilmembrankörpers 8.

In entsprechenden Ausführungen weist die Brausestrahlscheibe 1 mindestens zwei Überdruckventilöffnungen 4 auf, an denen je ein Überdruckventil 5 angeordnet ist. Dadurch kann im Überdruckfall das Fluid F_{U} an mehreren Stellen aus der Fluidkammer 2 über je eines der Überdruckventile 5 abgeführt werden. Die Überdruckventile 5 können in entsprechenden Ausführungen vollständig bau- und funktionsgleich sein oder sich alternativ in ihrem Ansprechverhalten dahingehend unterscheiden, dass sie auf voneinander verschiedene Überdruckwerte des Fluiddrucks in der Fluidkammer 2 ansprechen. So kann zum Beispiel mindestens ein erstes Überdruckventil 5 bei einem ersten Überdruckwert und mindestens ein zweites Überdruckventil 5 bei einem gegenüber dem ersten höheren zweiten Überdruckwert ansprechen, d.h. seine Überdruckaustrittsöffnung 6 freigeben. Das unterschiedliche Ansprechverhalten kann beispielsweise durch entsprechend unterschiedliche Gestaltung des Randteils 8b des jeweiligen Ventilmembrankörpers 8 hinsichtlich seines elastischen Biegeverhaltens realisiert sein.

In entsprechenden Ausführungen kann das Überdruckventil 5 mehrstufig auf mindestens zwei voneinander verschiedene Überdruckwerte des Fluiddrucks in der Fluidkammer 2 ansprechen. Der Ventilmembrankörper 8 bewegt sich in diesem Fall bei einem ersten Überdruckwert in eine die Überdruckaustrittsöffnung 6 mit einem ersten Öffnungsquerschnitt partiell freigebende erste Überdruckstellung, in der er z.B. nur geringfügig vom Ventilsitz 7 abgehoben ist, und bei einem gegenüber dem ersten größeren zweiten Überdruckwert in eine die Überdruckaustrittsöffnung 6 mit gegenüber dem ersten größerem zweiten Öffnungsquerschnitt freigebende zweite Überdruckstellung, bei der es sich z.B. um die in Fig. 3 gezeigte, sich gegen die Innenseite der Strahlscheibe 1 abstützende Stellung V_{U} handeln kann. Vorzugsweise ist in diesem Fall der Randteil 8a des Ventilmembrankörpers 8 derart ausgebildet, dass er für die erste Überdruckstellung eine stabile Zwischenstellung der elastischen Klappbewegung des Ventilmembrankörpers 8 bereitstellt.

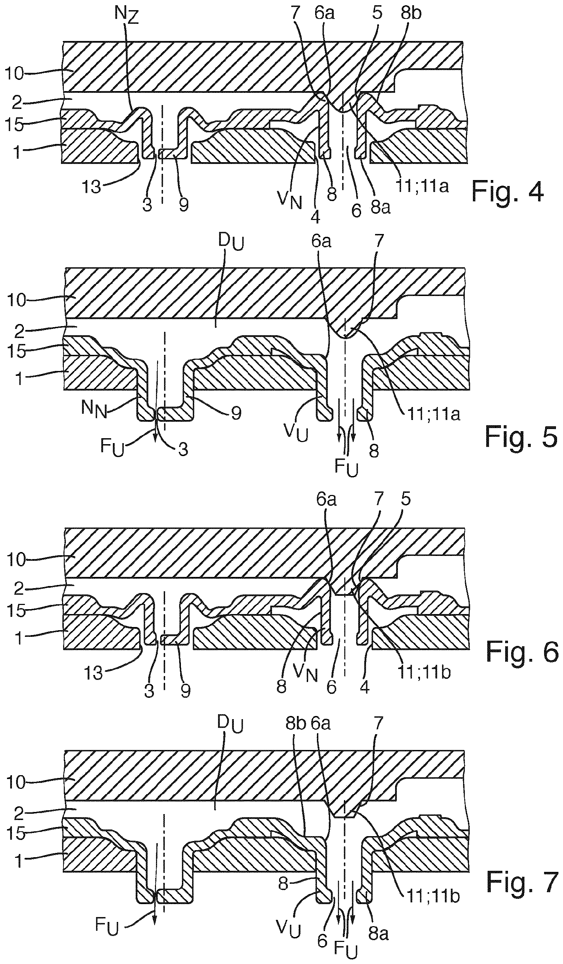

In entsprechenden Ausführungsformen weist der Ventilsitz 7 eine Absperrkontur 11 auf, die in der Normaldruckstellung V_{N} des Ventilmembrankörpers 8 in den Einmündungsbereich 6a der Überdruckaustrittsöffnung 6 eingreift. In einer entsprechenden Ausführung ist die Absperrkontur 11, wie im Ausführungsbeispiel der Fig. 4 und 5, durch einen halbkugelförmigen Absperrvorsprung 11a gebildet. Dabei veranschaulicht Fig. 4 den Nulldruckzustand mit druckloser Fluidkammer 2, in welchem sich der Ventilmembrankörper 8 in seiner Normaldruckstellung V_{N} und der Strahlaustrittsnippel 9 in seiner Nulldruckstellung N_{Z} befinden, während Fig. 5 den Überdruckzustand veranschaulicht, in welchem sich der Ventilmembrankörper 8 in seiner Überdruckstellung V_{U} und der Strahlaustrittsnippel 9 in seiner Normaldruckstellung N_{N} befinden.

In einer alternativen Ausführung ist die Absperrkontur 11 durch einen kegelförmigen Absperrvorsprung 11b gebildet, wie im Ausführungsbeispiel der Fig. 6 und 7. Wiederum veranschaulichen hierbei Fig. 6 den fluiddruckfreien Ausgangszustand der Brausestrahlerzeugungsvorrichtung und Fig. 7 den Überdruckzustand. Mit diesen und weiteren möglichen, alternativen Absperrkonturen des Ventilsitzes 7 kann das Abdichtverhalten des Ventilsitzes 7 bezüglich der Überdruckaustrittsöffnung 6 unterstützt werden. In den Ausführungen mit der den Ventilsitz 7 aufweisenden Kammerbodenplatte 10 kann die Absperrkontur 11 einteilig mit der Kammerbodenplatte 10 oder als separater Vorsprung aus dem gleichen oder einem anderen Material als die Kammerbodenplatte 10 gebildet sein.

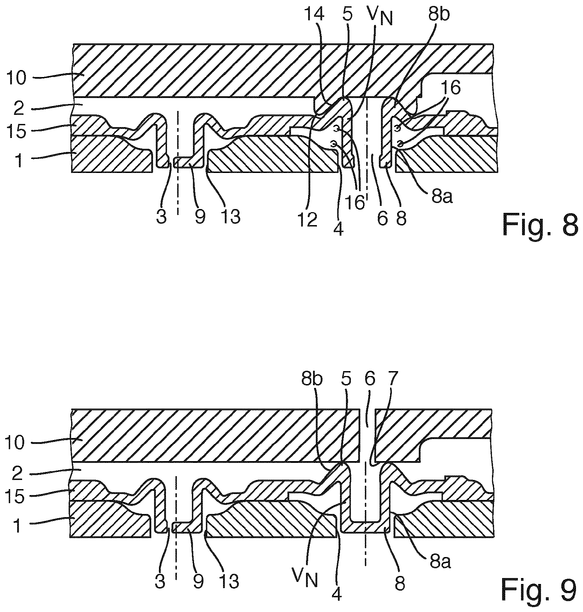

In entsprechenden Ausführungsformen weist der Einmündungsbereich 6a der Überdruckaustrittsöffnung 6 in der Normaldruckstellung V_{N} des Ventilmembrankörpers 8 eine kegelstumpfförmige Außenkontur 12 auf, und der Ventilsitz 7 weist eine korrespondierend kegelstumpfförmige Innenkontur 14 auf, wie dies in Fig. 8 für ein derartiges Ausführungsbeispiel gezeigt ist. Bei Realisierungen mit der Kammerbodenplatte 10 kann der Ventilsitz 7 mit dieser kegelstumpfförmigen Innenkontur 14 wiederum einteilig mit der Kammerbodenplatte 10 gebildet sein oder alternativ als separates Bauteil an der Kammerbodenplatte 10 angeordnet sein. Auch diese Ventilsitzgestaltung kann das Abdichtverhalten des Überdruckventils 5 fördern. Bei Bedarf kann dieser Ventilsitztyp zusätzlich mit der in den Einmündungsbereich 6a der Überdruckaustrittsöffnung 6 eingreifenden Absperrkontur 11 versehen sein.

In entsprechenden Ausführungsformen ist ein federelastisches Element 16 vorgesehen, das den Ventilmembrankörper 8 in Richtung seiner Normaldruckstellung V_{N} gegen den Ventilsitz anliegend vorspannt, wie es in der Realisierung von Fig. 8 als Option beispielhaft gestrichelt gezeigt ist. Ein solches federelastisches Element 16 kann entsprechend auch bei den übrigen gezeigten und darüber hinaus erwähnten Ausführungsformen vorgesehen sein. Das federelastische Element 16 kann z.B. wie gezeigt eine Schraubendruckfeder sein, alternativ eine andere Feder, wie eine Spiraldruckfeder oder eine Schrauben- oder Spiralzugfeder. Mit Wahl einer entsprechenden Federkonstante des federelastischen Elements 16 kann zusätzlich zur Auslegung des elastischen Verhaltens des Ventilmembrankörpers 8 und insbesondere von dessen Ringteil 8b die Überdruckansprechschwelle für das Überdruckventil 5 in gewünschter Weise eingestellt bzw. gesteuert werden.

In entsprechenden Ausführungsformen weist der Ventilsitz 7 die Überdruckaustrittsöffnung 6 auf, die in diesem Fall in den Ventilsitz 7 auf dessen dem Ventilmembrankörper 8 zugewandten Seite einmündet. Fig. 9 veranschaulicht ein diesbezügliches Ausführungsbeispiel. Der Ventilmembrankörper 8 ist in diesem Fall geschlossen ausgeführt und legt sich in der gezeigten Normaldruckstellung V_{N} mit seinem vorzugsweise kreisringförmigen Randteil 8b derart gegen den Ventilsitz 7 an, dass die Überdruckaustrittsöffnung 6 vom Randteil 8b ringförmig geschlossen umgeben und dadurch von der Fluidkammer 2 abgetrennt ist. Im Normalbetrieb bleibt die Überdruckaustrittsöffnung 6 dadurch geschlossen, und das Fluid tritt ausschließlich über das oder die Strahlaustrittsöffnungen 3 nach vorn aus der Brausestrahlscheibe 1 aus.

Im Überdruckfall nimmt der Ventilmembrankörper 8 bei dieser Ausführung wiederum seine Überdruckstellung V_{U} ein und gibt dadurch die Verbindung von der Überdruckaustrittsöffnung 6 zur Fluidkammer 2 frei. Dadurch kann in der Fluidkammer 2 unter Überdruck stehendes Fluid durch die Überdruckaustrittsöffnung 6 des Ventilsitzes 7 nach hinten abgeführt werden, d.h. von der Strahlscheibe 1 weg, und nicht wie bei den Ausführungsbeispielen der Fig. 2 bis 8 durch die Brausestrahlscheibe 1 hindurch. An der Rückseite der Brausestrahlerzeugungsvorrichtung, zum Beispiel an der Rückseite der Kammerbodenplatte 10, kann das über die Überdruckaustrittsöffnung 6 abgeführte Fluid in einer gewünschten Weise weitergeleitet werden. Diese Ausführungsvariante ist speziell für Anwendungen günstig, bei denen es nicht gewünscht ist, dass unter Überdruck stehendes Fluid nach vorn aus der Brausestrahlscheibe 1 austritt.

Wie die gezeigten und oben erwähnten weiteren Ausführungsbeispiele deutlich machen, stellt die Erfindung eine Brausestrahlerzeugungsvorrichtung mit besonders vorteilhafter Überdruckventilrealisierung zur Verfügung. Die Brausestrahlerzeugungsvorrichtung ist insbesondere für sanitäre Brauseköpfe, zum Beispiel bei sanitären Kopfbrausen, Handbrausen oder Seitenbrausen sowie Küchenauszugsbrausen, aber auch für nicht-sanitäre Brauseköpfe überall dort nutzbringend verwendbar, wo Bedarf besteht, für einen Brausekopf einen Überdruckschutz verfügbar zu haben.

## Patentansprüche

1. Brausestrahlerzeugungsvorrichtung für einen Brausekopf, insbesondere für einen sanitären Brausekopf, mit
- einer Brausestrahlscheibe (1), die eine Fluidkammer (2) austrittsseitig begrenzt und mindestens eine aus der Fluidkammer ausmündende Strahlaustrittsöffnung (3) und mindestens eine Überdruckventilöffnung (4) aufweist,
- mindestens einem an der Überdruckventilöffnung angeordneten Überdruckventil (5), das eine aus der Fluidkammer ausmündende Überdruckaustrittsöffnung (6), einen unbewegten Ventilsitz (7) und einen mit diesem zusammenwirkenden, von einem Fluiddruck in der Fluidkammer gesteuert bewegten Ventilkörper aufweist, der in einer Normaldruckstellung (V_{N}) die Überdruckaustrittsöffnung schließend gegen den Ventilsitz anliegt und in einer Überdruckstellung (V_{U}) die Überdruckaustrittsöffnung freigebend vom Ventilsitz abgehoben ist, **dadurch gekennzeichnet, dass**
- der Ventilkörper als Ventilmembrankörper (8) aus einem elastischen Material gebildet ist, der einen sich in die Überdruckventilöffnung (4) erstreckenden, zylindrischen Mittenteil (8a) und einen den Mittenteil umgebenden, deformierend klappbeweglichen Randteil (8b) aufweist, wobei sich der Ventilmembrankörper mit seinem Mittenteil durch die deformierende Klappbewegung seines Randteils mit zur Brausestrahlscheibe (1) senkrechter Hauptrichtungskomponente zwischen der Normaldruckstellung (V_{N}) und der Überdruckstellung (V_{U}) in der Überdruckventilöffnung bewegt.

2. Brausestrahlerzeugungsvorrichtung nach Anspruch 1, wobei die Fluidkammer auf ihrer der Brausestrahlscheibe abgewandten Seite durch eine den Ventilsitz aufweisende Kammerbodenplatte (10) begrenzt ist.

3. Brausestrahlerzeugungsvorrichtung nach Anspruch 1 oder 2, wobei das Mittenteil des Ventilmembrankörpers hohlzylindrisch ist und die Überdruckaustrittsöffnung aufweist und die Überdruckaustrittsöffnung aus dem Ventilmembrankörper auf dessen dem Ventilsitz abgewandten Seite ausmündet.

4. Brausestrahlerzeugungsvorrichtung nach einem der Ansprüche 1 bis 3, wobei das Mittenteil des Ventilmembrankörpers hohlzylindrisch ist und die Überdruckaustrittsöffnung aufweist und die Überdruckaustrittsöffnung in den Ventilmembrankörper auf dessen dem Ventilsitz zugewandten Seite einmündet.

5. Brausestrahlerzeugungsvorrichtung nach Anspruch 4, wobei
- der Ventilsitz einen in der Normaldruckstellung des Ventilmembrankörpers in einen Einmündungsbereich (6a) der Überdruckaustrittsöffnung im Ventilmembrankörper eingreifende Absperrkontur (11) aufweist und/oder
- ein Einmündungsbereich (6a) der Überdruckaustrittsöffnung im Ventilmembrankörper eine in der Normaldruckstellung V_{N} des Ventilmembrankörpers kegelstumpfförmige Außenkontur (12) aufweist und der Ventilsitz eine korrespondierend kegelstumpfförmige Innenkontur (14) aufweist.

6. Brausestrahlerzeugungsvorrichtung nach Anspruch 5, wobei die Absperrkontur durch einen halbkugelförmigen oder kegelförmigen Absperrvorsprung (11a, 11b) gebildet ist.

7. Brausestrahlerzeugungsvorrichtung nach Anspruch 1 oder 2, wobei der Ventilsitz die Überdruckaustrittsöffnung aufweist und die Überdruckaustrittsöffnung in den Ventilsitz auf dessen dem Ventilmembrankörper zugewandten Seite einmündet.

8. Brausestrahlerzeugungsvorrichtung nach einem der Ansprüche 1 bis 7, wobei die mindestens eine Strahlaustrittsöffnung von einem Strahlaustrittsnippel (9) gebildet ist, der mit dem Ventilmembrankörper einteilig aus dem elastischen Material gebildet ist.

9. Brausestrahlerzeugungsvorrichtung nach einem der Ansprüche 1 bis 8, wobei die mindestens eine Strahlaustrittsöffnung von einem Strahlaustrittsnippel (9) aus einem elastischen Material gebildet ist, der einen sich in eine Nippelaustrittsöffnung (13) der Strahlscheibe erstreckenden, hohlzylindrischen Mittenteil (9a) und einen den Mittenteil umgebenden, deformierend klappbeweglichen Randteil (9b) aufweist, wobei sich der Strahlaustrittsnippel mit seinem Mittenteil durch die deformierende Klappbewegung seines Randteils mit zur Brausestrahlscheibe senkrechter Hauptrichtungskomponente zwischen einer Nulldruckstellung (N_{Z}) und einer Normaldruckstellung (N_{N}) in der Nippelaustrittsöffnung bewegt.

10. Brausestrahlerzeugungsvorrichtung nach einem der Ansprüche 1 bis 9, wobei
- die Brausestrahlscheibe mindestens zwei Überdruckventilöffnungen aufweist, an denen je ein Überdruckventil angeordnet ist, wobei die Überdruckventile auf voneinander verschiedene Überdruckwerte des Fluiddrucks in der Fluidkammer ansprechen, und/oder
- das mindestens eine Überdruckventil mehrstufig auf mindestens zwei voneinander verschiedene Überdruckwerte des Fluiddrucks in der Fluidkammer anspricht, wobei sich der Ventilmembrankörper bei einem ersten Überdruckwert in eine die Überdruckaustrittsöffnung mit einem ersten Öffnungsquerschnitt partiell freigebende erste Überdruckstellung und bei einem gegenüber dem ersten größeren zweiten Überdruckwert in eine die Überdruckaustrittsöffnung mit gegenüber dem ersten größeren zweiten Öffnungsquerschnitt freigebende zweite Überdruckstellung bewegt.

## Claims

1. Shower jet generating device for a shower head, preferably for a sanitary shower head, comprising
- a shower jet disk (1) delimiting a fluid chamber (2) on an outlet side and including at least one jet outlet opening (3) leading out of the fluid chamber and at least one overpressure valve opening (4),
- at least one overpressure valve (5) disposed on the overpressure valve opening, which overpressure valve includes an overpressure outlet opening (6) leading out of the fluid chamber, an immobile valve seat (7) and a valve body capable of movement controlled by a fluid pressure in the fluid chamber and interacting with said valve seat, which valve body, in a normal pressure position (V_{N}), rests against the valve seat, thereby closing the overpressure outlet opening, and, in an overpressure position (V_{U}), is lifted off the valve seat, thereby exposing the overpressure outlet opening,
**characterized in that**
- the valve body is formed as a valve membrane body (8) made of an elastic material, which valve membrane body comprises a cylindrical central portion (8a) extending into the overpressure valve opening (4) and a deformably flap-movable boundary portion (8b) surrounding the central portion, wherein the valve membrane body moves with its central portion within the overpressure valve opening between the normal pressure position (V_{N}) and the overpressure position (V_{U}) by the deforming flap movement of the boundary portion, with a main directional component perpendicular to the shower jet disk (1).

2. Shower jet generating device according to claim 1, wherein the fluid chamber, on its side facing away from the shower jet disk, is delimited by a chamber bottom plate (10) including the valve seat.

3. Shower jet generating device according to claim 1 or 2, wherein the central portion of the valve membrane body is hollow cylindrical and comprises the overpressure outlet opening, and the overpressure outlet opening leads out of the valve membrane body on its side facing away from the valve seat.

4. Shower jet generating device according to any one of claims 1 to 3, wherein the central portion of the valve membrane body is hollow cylindrical and comprises the overpressure outlet opening, and the overpressure outlet opening leads into the valve membrane body on its side facing towards the valve seat.

5. Shower jet generating device according to claim 4, wherein
- the valve seat comprises a shut-off contour (11) engaging in an input region (6a) of the overpressure outlet opening in the valve membrane body, in the normal pressure position of the valve membrane body, and/or
- an input region (6a) of the overpressure outlet opening in the valve membrane body comprises a frustoconical outer contour (12), in the normal pressure position V_{N} of the valve membrane body, and the valve seat comprises a corresponding frustoconical inner contour (14).

6. Shower jet generating device according to claim 5, wherein the shut-off contour is formed by a hemispherical or conical shut-off projection (11a, 11b).

7. Shower jet generating device according to claim 1 or 2, wherein the valve seat comprises the overpressure outlet opening, and the overpressure outlet opening leads into the valve seat on its side facing towards the valve membrane body.

8. Shower jet generating device according to any one of claims 1 to 7, wherein the at least one jet outlet opening is formed by a jet outlet nipple (9) which is formed from the elastic material integral with the valve membrane body.

9. Shower jet generating device according to any one of claims 1 to 8, wherein the at least one jet outlet opening is formed by a jet outlet nipple (9) made of an elastic material, which nipple has a hollow cylindrical central portion (9a) extending into a nipple outlet opening (13) of the jet disk and a deformably flap-movable boundary portion (9b) surrounding the central portion, wherein the jet outlet nipple moves with its central portion within the nipple outlet opening between a zero pressure position (N_{Z}) and a normal pressure position (N_{N}) by the deforming flap movement of its boundary portion, with a main directional component perpendicular to the shower jet disk.

10. Shower jet generating device according to any one of claims 1 to 9, wherein
- the shower jet disk comprises at least two overpressure valve openings, each provided with a respective overpressure valve, wherein the overpressure valves respond to different overpressure values of the fluid pressure in the fluid chamber, and/or
- the at least one overpressure valve is capable of multilevel response to at least two different overpressure values of the fluid pressure in the fluid chamber, wherein the valve membrane body moves, at a first overpressure value, to a first overpressure position partially exposing the overpressure outlet opening with a first opening cross-section and, at a second overpressure value that is greater than the first overpressure value, to a second overpressure position exposing the overpressure outlet opening with a second opening cross-section that is greater than the first one.

## Revendications

1. Dispositif de génération de jet de douche pour une pomme de douche, en particulier pour une pomme de douche sanitaire, comportant
- un disque à jet de douche (1) qui délimite une chambre à fluide (2) du côté sortie et qui présente au moins une ouverture de sortie de jet (3) débouchant hors de la chambre à fluide et au moins une ouverture de vanne de surpression (4),
- au moins une vanne de surpression (5) disposée au niveau de l'ouverture de vanne de surpression et présentant une ouverture de sortie de surpression (6) débouchant hors de la chambre à fluide, un siège de vanne (7) immobile et un corps de vanne coopérant avec celui-ci et mobile en étant commandé par une pression de fluide dans la chambre à fluide, corps de vanne qui, dans une position de pression normale (V_{N}), s'appuie contre le siège de vanne en fermant l'ouverture de sortie de surpression et qui, dans une position de surpression (V_{U}), est soulevé du siège de vanne en libérant l'ouverture de sortie de surpression,
**caractérisé en ce que**
- le corps de vanne est réalisé sous forme de corps de membrane de vanne (8) en un matériau élastique qui comprend une partie centrale cylindrique (8a) s'étendant jusque dans l'ouverture de vanne de surpression (4) et une partie de bord (8b) entourant la partie centrale et mobile de façon rabattable avec déformation, le corps de membrane de vanne se déplaçant avec sa partie centrale entre la position de pression normale (V_{N}) et la position de surpression (V_{U}) dans l'ouverture de vanne de surpression, par le mouvement de rabattement avec déformation de sa partie de bord, avec une composante directionnelle principale perpendiculaire au disque à jet de douche (1).

2. Dispositif de génération de jet de douche selon la revendication 1,
dans lequel
sur son côté détourné du disque à jet de douche, la chambre à fluide est délimitée par une plaque de fond de chambre (10) présentant le siège de vanne.

3. Dispositif de génération de jet de douche selon la revendication 1 ou 2, dans lequel
la partie centrale du corps de membrane de vanne est en forme de cylindre creux et présente l'ouverture de sortie de surpression, et l'ouverture de sortie de surpression débouche hors du corps de membrane de vanne sur son côté détourné du siège de vanne.

4. Dispositif de génération de jet de douche selon l'une des revendications 1 à 3,
dans lequel
la partie centrale du corps de membrane de vanne est en forme de cylindre creux et présente l'ouverture de sortie de surpression, et l'ouverture de sortie de surpression débouche dans le corps de membrane de vanne sur son côté tourné vers le siège de vanne.

5. Dispositif de génération de jet de douche selon la revendication 4,
dans lequel
- le siège de vanne présente un contour d'obturation (11) qui s'engage dans une zone d'embouchure (6a) de l'ouverture de sortie de surpression dans le corps de membrane de vanne, dans la position de pression normale du corps de membrane de vanne, et/ou
- une zone d'embouchure (6a) de l'ouverture de sortie de surpression dans le corps de membrane de vanne présente un contour extérieur (12) qui est en forme tronconique dans la position de pression normale V_{N} du corps de membrane de vanne, et le siège de vanne présente un contour intérieur (14) en forme tronconique correspondante.

6. Dispositif de génération de jet de douche selon la revendication 5,
dans lequel
le contour d'obturation est formé par une saillie d'obturation (11a, 11b) en forme hémisphérique ou conique.

7. Dispositif de génération de jet de douche selon la revendication 1 ou 2, dans lequel
le siège de vanne présente l'ouverture de sortie de surpression, et l'ouverture de sortie de surpression débouche dans le siège de vanne sur son côté tourné vers le corps de membrane de vanne.

8. Dispositif de génération de jet de douche selon l'une des revendications 1 à 7,
dans lequel
ladite au moins une ouverture de sortie de jet est formée par un embout de sortie de jet (9) qui est réalisé en matière élastique d'un seul tenant avec le corps de membrane de vanne.

9. Dispositif de génération de jet de douche selon l'une des revendications 1 à 8,
dans lequel
ladite au moins une ouverture de sortie de jet est formée par un embout de sortie de jet (9) en un matériau élastique qui présente une partie centrale (9a) en forme de cylindre creux s'étendant jusque dans une ouverture de sortie d'embout (13) du disque à jet, et une partie de bord (9b) entourant la partie centrale et mobile par rabattement avec déformation,
l'embout de sortie de jet se déplace avec sa partie centrale entre une position de pression nulle (N_{Z}) et une position de pression normale (N_{N}) dans l'ouverture de sortie de l'embout par le mouvement de rabattement avec déformation de sa partie de bord, avec une composante directionnelle principale perpendiculaire au disque à jet de douche.

10. Dispositif de génération de jet de douche selon l'une des revendications 1 à 9,
dans lequel
- le disque à jet de douche présente au moins deux ouvertures de vanne de surpression, sur chacune desquelles est disposée une vanne de surpression, les vannes de surpression réagissant à des valeurs de surpression mutuellement différentes de la pression du fluide dans la chambre à fluide, et/ou
- ladite au moins une vanne de surpression réagit en plusieurs étapes à au moins deux valeurs de surpression mutuellement différentes de la pression du fluide dans la chambre à fluide, le corps de membrane de vanne se déplaçant, à une première valeur de surpression, jusque dans une première position de surpression libérant partiellement l'ouverture de sortie de surpression avec une première section transversale d'ouverture, et, à une deuxième valeur de surpression supérieure à la première, jusque dans une deuxième position de surpression libérant l'ouverture de sortie de surpression avec une deuxième section transversale d'ouverture qui est supérieure à la première.
